# EUROPEAN PATENT SPECIFICATION

(11) **EP 4 143 543 B1**
(45) Date of publication and mention of the grant of the patent: **04.11.2026**
(21) Application number: 20731618.3
(22) Date of filing: 30.04.2020
(51) Int. Cl.: G01N 21/64, G01N 27/447, G02B 26/10

(54) **LASER ILLUMINATION TECHNIQUES FOR CAPILLARY ELECTROPHORESIS**
LASERBELEUCHTUNGSVERFAHREN FÜR DIE KAPILLARELEKTROPHORESE
TECHNIQUES D'ÉCLAIRAGE LASER POUR ÉLECTROPHORÈSE CAPILLAIRE

(43) Date of publication of application: 08.03.2023
(73) Proprietor: Promega Corporation, Madison, WI 53711-5399 (US)
(72) Inventor: LAZAREV, Sergey, Fitchburg, Wisconsin 53711 (US); JOHNSON, Bruce, Fitchburg, Wisconsin 53711 (US)
(74) Representative: Potter Clarkson
(86) International application number: PCT/US2020/030759
(87) International publication number: WO 2021/221665

(56) References cited:
- EP-A1- 0 284 660
- WO-A1-01/25773
- WO-A1-96/23213
- DE-A1- 3 037 983
- US-A- 5 424 841
- US-A1- 2018 136 126

## Description

### CROSS REFERENCE TO RELATED APPLICATIONS

### BACKGROUND

Fluorescence can be used to enable detection technology for many fields including fundamental research, analytical chemistry, separation science, biochemical assay monitoring, and drug discovery. For example, the development of fluorescence-based, multi-capillary gel electrophoresis instruments enabled the completion of the human genome project ahead of schedule and ushered medical research into the era of personalized medicine.

In certain capillary electrophoresis (CE) systems fluorescence detection is performed using lasers. A laser light source provides a focused beam with a relatively narrow spectral width (e.g., 1-5 nm for laser diodes or even less, e.g., 0.01-0.001 nm for gas lasers), and a relatively high photon density, thereby enabling high sensitivity measurements even when the area of excitation is relatively small (e.g., on the order of tens of micrometers).
EP 0284660 A1 discloses an apparatus for determining a base sequence comprising an assembly for making an exciting beam incident on a slab of electrophoretic gel in a direction normal to the plane thereof, the gel containing nucleic acid fragments labelled with a labelling pigment and developed or being developed therein by electrophoresis, and a light receiving unit for receiving at an end face of the gel the luminescence emitted by the labelling pigment on the fragments developed in the gel.

### SUMMARY

According to the invention as defined in claim 1, a laser-line-generating system generates and processes a laser light to illuminate a capillary array. The laser-line-generating system includes a laser-light source, focusing optics *(e.g.,* an aspherical lens), a first optical scanner, and a second optical scanner. The laser-light source outputs a first laser light. The focusing optics receives the first laser light and reduce a beam width of the first laser light. The first optical scanner *(e.g.,* a first laser galvanometer) receives the first laser light and outputs a first optical-scanner-outputted light by varying an angle of outputted light along a first dimension. The second optical scanner *(e.g.,* a second laser galvanometer) receives the first optical-scanner-outputted light and outputs a second optical-scanner-outputted light by varying an angle of outputted light along a second dimension. The second optical-scanner-outputted light comprises a line, where the line includes dimensional components in both the first dimension and the second dimension. The system may further include an optical filter configured to reduce a spectral width of the laser light. The system may further include temperature-stabilizing componentry configured to stabilize a temperature of the laser-light source. The system may further include a spectrograph slit. A position of the laser line is adjustable to substantially correspond to a position of the spectrograph slit by adjusting operation of the first optical scanner and the second optical scanner. The system may further include a light detector and a laser driver. The light detector may receive a portion of the laser light and generate an output signal in response to a characteristic of the laser light. The laser driver may receive the output signal from the light detector and adjust a power provided to the laser-light source according to at least a value of the output signal and, for example, a command signal.

When laser galvanometers are used as optical scanners, the first galvanometer is controlled by at least a first triangular wave signal and a first DC signal. The second laser galvanometer is controlled by at least a second triangular wave signal and a DC second signal. The first laser galvanometer may have an oscillating mirror configured to deflect the first laser light between approximately -40° to +40°. The second laser galvanometer may include an oscillating mirror configured to deflect the first optical-scanner-outputted light between approximately -40° to +40°. The first laser galvanometer may have a scanning frequency of between approximately 100-1000 Hz. The second laser galvanometer comprises a scanning frequency of between approximately 100-1000 Hz.

According to certain embodiments, the laser-line-generating system may include a first laser-light source, a second laser-light source and second focusing optics *(e.g.,* an aspherical lens). The second laser-light source may output a second laser light. The second focusing optics may receive the second laser light and reduce a beam width of the second laser light. The first optical scanner *(e.g.,* a first laser galvanometer) receives the first laser light and second laser light and output a first optical-scanner-outputted light by varying an angle of outputted light along a first dimension. The system may further include a first optical filter configured to reduce a spectral width of the first laser light. The system may further include a second optical filter configured to reduce a spectral width of the second laser light. The system may further include temperature-stabilizing componentry configured to stabilize a temperature of the laser-light source. The system may further include a spectrograph slit. A position of the laser line is adjustable to substantially correspond to a position of the spectrograph slit by adjusting operation of the first optical scanner and the second optical scanner. The system may further include a first light detector, a first laser driver, a second light detector, and a second laser driver. The first light detector may receive a portion of the first laser light and generate a first output signal in response to a characteristic of the first laser light. The first laser driver may receive the first output signal from the first light detector and adjust a power provided to the first laser-light source according to at least a value of the first output signal and, for example, a command signal. The second light detector may receive a portion of the second laser light and generate a second output signal in response to a characteristic of the second laser light. The second laser driver may receive the second output signal from the second light detector and adjust a power provided to the second laser-light source according to at least a value of the second output signal and, for example, a command signal.

When laser galvanometers are used as optical scanners, the first galvanometer is controlled by at least a first triangular wave signal and a first DC signal. The second laser galvanometer is controlled by at least a second triangular wave signal and a DC second signal. The first laser galvanometer may have an oscillating mirror configured to deflect the first laser light between approximately -40° to +40°. The second laser galvanometer may include an oscillating mirror configured to deflect the first optical-scanner-outputted light between approximately -40° to +40°. The first laser galvanometer may have a scanning frequency of between approximately 100-1000 Hz. The second laser galvanometer comprises a scanning frequency of between approximately 100-1000 Hz.

### BRIEF DESCRIPTION OF SEVERAL VIEWS OF THE DRAWINGS

FIG. 1 illustrates a system for illuminating a portion of a capillary array with one laser, according to certain embodiments.
FIG. 2 illustrates a system for illuminating a portion of a capillary array with two lasers, according to certain embodiments.
FIG. 3 illustrates a system for illuminating and imaging a capillary array, according to certain embodiments.
FIG. 4 illustrates a system for illuminating and imaging a capillary array, according to certain embodiments.
FIG. 5 illustrates illumination of a capillary array and a slit block, according to certain embodiments.
FIG. 6 depicts a functional block diagram of a system for illuminating a portion of a capillary array, according to certain embodiments.
FIG. 7 illustrates a principle of a technique whereby the length of a laser line is greater than a width of a capillary array being illuminated, according to certain embodiments.

The foregoing summary, as well as the following detailed description of certain techniques of the present application, will be better understood when read in conjunction with the appended drawings. For the purposes of illustration, certain techniques are shown in the drawings. It should be understood, however, that the claims are not limited to the arrangements and instrumentality shown in the attached drawings.

### DETAILED DESCRIPTION

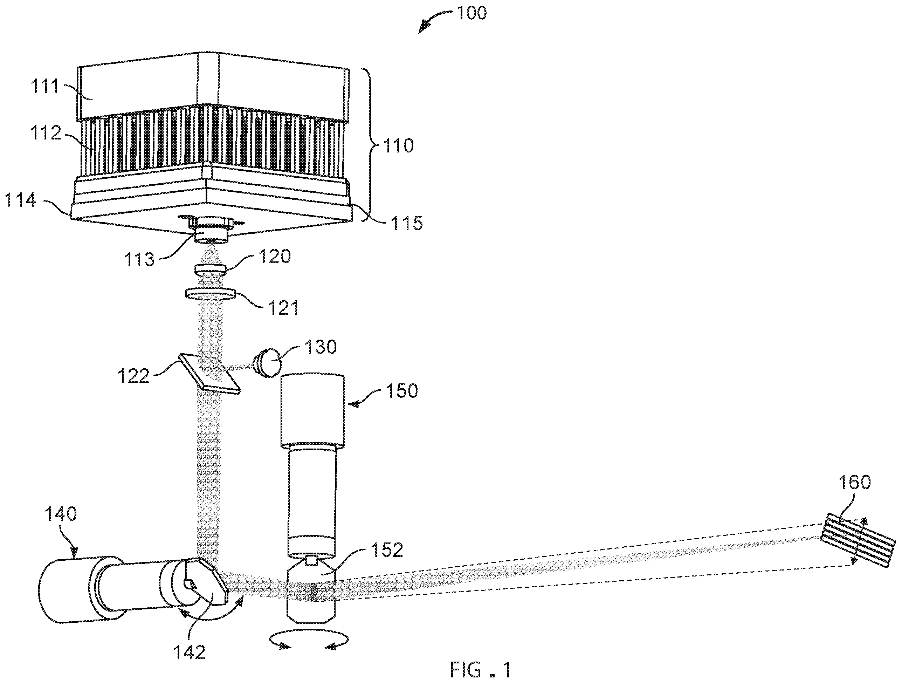

FIG. 1 illustrates a system 100 for illuminating a portion of a capillary array with one laser, according to certain embodiments. The system 100 may include a laser-source assembly 110, focusing optics 120, an optical filter 121, a beam splitter 122, a photodiode 130, a first optical scanner 140, and a second optical scanner 150. Light outputted from the second optical scanner 150 illuminates a portion of a capillary array 160.

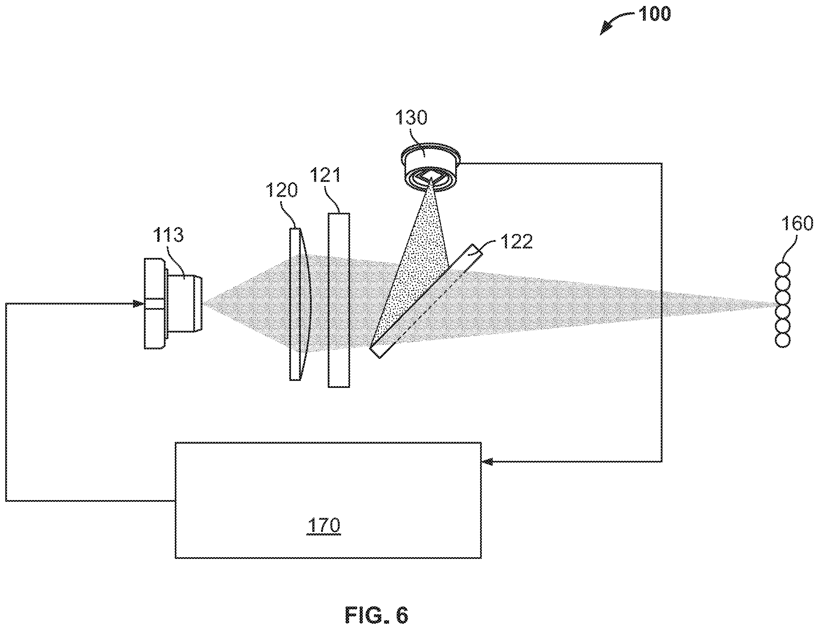

The laser-source assembly 110 may include a laser diode 113, a heat sink 112, a fan 111, a laser base plate 114, and a thermo-electric cooling (TEC) element 115. The laser diode 113 may receive power from a driver 170 (not shown in FIG. 1, but see FIG. 6). The laser diode 113 may include a component such as a blue-green laser diode. The laser diode 113 may emit light such as at 485-495 nm or 505-520 nm. The light may have a power of 10-1000 mW, for example. The beam of the light may have a beam divergence of between 10-55 degrees. The laser base plate 114 may serve to thermally conduct or couple the laser diode 113 with the TEC element 115. The laser base plate 114 may have the same surface area or be similar in size to that of the TEC element 115. The laser base plate 114 may have a thickness of about 3 mm or 1/8". The laser base plate 114 may include mechanical parts (e.g., clamps) to facilitate holding the laser diode 113 onto the laser base plate 114. The TEC element 115 may substantially maintain or set the temperature of the laser diode 113. The TEC element 115 may include a Peltier device or other equivalent component (e.g., a liquid cooling system). The TEC element 115 may be able to control temperature in order to dissipate the laser heat generated during operation in order to maintain the laser temperature at the required precision, which may be between 0.1-1.0 degrees.

A heat sink 112 may be thermally coupled to the TEC element 115. The heat sink 112 may include a plurality of thermally conducting fins or columns separated by spaces of air. The heat sink 112 may include a material such as aluminum or copper. A fan 111 may be thermally coupled to the heat sink 112. The fan 111 may cause the TEC element 115 to heat up or cool down.

As shown in FIG. 6, the laser driver 170 may receive feedback from photosensor 130 and drive the laser diode 113 accordingly. Some laser diodes 113 may have internal photosensors inside the laser case. In some embodiments, a feedback signal is directed to the appropriate input of the laser driver 170 from internal photosensor. In such an embodiment, the beam splitter 122 may not be needed. The laser driver 170 may also receive feedback from a temperature sensor (e.g., a thermistor or thermocouple; not shown) mounted proximate the laser diode 113 and/or a processor (not shown). The temperature sensor signal may be compared with the temperature set point and converted by a proportional-integral-differential (PID) controller into voltage applied to TEC element 115 to stabilize laser diode 113 temperature at the set point. This could be a DC voltage or pulse-width/frequency-modulated voltage.

The focusing optics 120 may be a single lens or include more than one optical element. The focusing optics 120 may include an aspherical lens. Such an aspherical lens may be formed by one or two aspherical surfaces to focus a relatively divergent (up to 55 degree or even more) laser beam. The focusing optics 120 may have a numerical aperture that is sufficient to intercept most laser beam. In some embodiments, the focusing optics 120 may include a single or a combination of different optical elements, e.g. spherical, aspherical, cylindrical, GRIN lenses, and/or on and off axis mirrors. The aspherical lens may be advantageous in some respects such as, for example, achieving a high numerical aperture sufficient to intercept a relatively divergent laser beam. Such a lens or optical elements may be used to focus the laser beam emitted by the laser diode 113. The focusing optics 120 may produce a laser beam with a relatively narrow width to provide relatively high intensity (optical power density) in the laser line. The theoretical limit for the beam size is a diffraction limited beam (calculated from light wave diffraction theory). At the focal point where the laser beam hits the capillary array 160, the beam width may be 10-100 microns. The laser beam may be wider, but signal quality (e.g., signal-to-noise ratio, time, spectral and spatial resolutions) may degrade.

The optical filter 121 may substantially attenuate light that may otherwise interfere with the advantageous fluorescence employed by a CE process. According to one embodiment, the optical filter 121 may pass wavelengths longer than laser, e.g., with the longest wavelength at plus 3-10 nm, while substantially attenuating wavelengths outside of that range. Such attenuated light frequencies may otherwise interfere with a CE process, such as the fluorescence signal at the shortest wavelengths. The optical filter 121 may be located as shown, or it may be positioned anywhere between the laser diode 113 and the capillary array 160. The optical filter 121 may be high-pass, low-pass, or band pass. The optical filter 121 may include more than one filtering component (for example, a high-pass filter and low-pass filter could be combined to achieve a band pass effect).

The beam splitter 122 may optionally be employed. Whereas some laser diodes *(e.g.,* laser diode 113) may have internal photosensors to monitor laser power for feedback control, if a laser diode does not have an internal photosensor, the beam splitter 122 may be inserted in the laser beam path such that a relatively small portion of laser light (for example, 0.1- 5%) may be split off and directed towards an external photosensor 130. Such a photosensor 130 may monitor laser power.

According to certain embodiments, optical scanners 140, 150 may be employed to convert a laser beam with an elliptical or circular cross-sectional beam-width profile into a laser line. As depicted, optical scanners 140, 150 are laser galvanometers. Other optical scanners 140, 150 are also contemplated such as one or more solid state electro-optic beam deflectors, piezoelectric devices, MEMS (Microelectromechanical Systems), or voice coil beam steering units. Laser galvanometers may be useful because of their market availability, reliability, relatively low cost, convenience of operation, lack of need for a high voltage source like for piezoelectric deflectors, and having a scanning speed much higher than the fluorescence detecting camera framing rate.

The first optical scanner 140 may include a laser galvanometer and may employ an oscillating mirror 142. The range of oscillation of the mirror 142 may provide laser beam deflection up to ± 40° with respect to the central position of the mirror 142 (at 0 degrees). The rate of oscillation of the first optical scanner 140 may be between approximately 100-1000 Hz *(e.g.,* at least 10-20 times more than camera framing rate). The first optical scanner 140 need not oscillate during operation. For example, the rotational amount (e.g., as measured in degrees) may remain static during operation. This static value may be adjustable (for example, between ± 40°).

The first optical scanner 140 outputs a laser line oriented along a first dimension. By "line" it is understood that the line is only a line segment, and the entirety of the line does not exist at any instant. Instead, the laser beam still has a substantially circular or elliptical cross-sectional profile at any instant. But, because the beam is being moved over time, the movement of the beam is along the path of a line, and a registering camera observes not a single laser spot, but a solid line whereby all the capillaries are illuminated relatively equally during a single camera frame exposure. The first dimension may be perpendicular to the orientation of the individual capillaries in the capillary array 160. For example, if the individual capillaries are oriented horizontally, the orientation of the line outputted by the first optical scanner 140 may be substantially vertical.

The length and/or endpoint positions of the line segment outputted by the first optical scanner 140 may be adjusted by changing the starting and stopping points of oscillation. For example, a position of the first *(e.g.,* top) endpoint of the line segment may correspond to a first maximum degree of rotation of oscillation for the oscillating mirror 142 (or similar component in a non-laser-galvanometer optical scanner 140) as determined by the control signal that controls the degree of rotation of the oscillating mirror 142. The second endpoint (e.g., bottom) of the line segment may correspond to the second maximum degree of rotation of oscillation for the oscillating mirror 142 (or similar component in a non-laser-galvanometer optical scanner 140).

The first optical scanner 140 is driven with a triangular wave, to provide linear movement of a laser beam. The control signal includes both an AC component (the triangular wave component) and a DC component. The DC component may determine a centerpoint or orientation of a line (or a given dimension of a line), whereas the AC component may determine the length of the line (or the length of the line along a given dimension). A triangular wave may result in a relatively constant speed of laser beam motion for relatively equal illumination of all capillaries in the capillary array 160.

The length of the line outputted by the first optical scanner 140 may be chosen according to the width of the capillary array 160 *(i.e.,* the distance between the edges of the array as measured perpendicularly to the primary orientation of the individual capillaries). Such a width of the capillary array 160 may be between approximately 4-30 mm depending on, for example, the number of capillaries, spacing between capillaries, and diameter of individual capillaries.

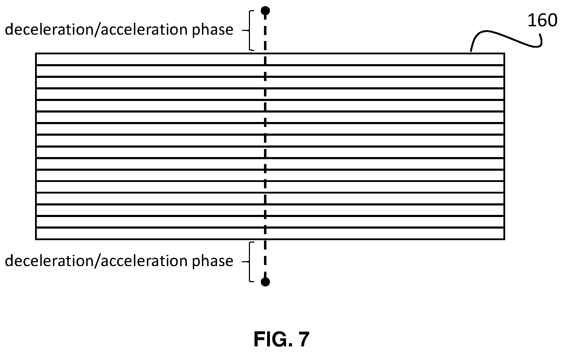

FIG. 7 illustrates a principle of a technique whereby the length of a laser line is greater than a width of a capillary array being illuminated, according to certain embodiments. As shown in FIG. 7, the length of the line (the "line" is illustrated as the broken line with endpoints on the top and bottom) outputted by the first optical scanner 140 may be chosen to be greater than the width of the capillary array 160, as near the endpoints of the line, scanning may be relatively uneven. When laser beam approaches either endpoint, the first optical scanner 140 must stop to reverse the direction of motion (decelerate, change directions, and then accelerate). This increases the time of laser illumination in the regions proximate to the endpoints (as compared to when the sweep of the laser beam has a relatively constant speed). To avoid such non-even illumination on the capillary array 160, the length of laser line may be selected to be longer than the width of the capillary array 160 such that the portions of the line not illuminating the capillary array 160 (the portion past the edges) is the portion containing an undue amount of illumination irregularity. In this manner, the speed of the laser beam that forms the line may be relatively constant in the portion of the laser line that impinges on the capillary array 160. Consequently, the illumination or light intensity of the line may be relatively constant in the portion of the line that intersects with the capillary array 160. To reduce the impact of irregular illumination during the deceleration/acceleration phases, the line may extend a certain distance above and below the capillary array 160. Such a distance for each non-impinging portion of the laser line may depend on parameters of the first optical scanner 140, such as mechanical inertia, controller performance, and may also depend on other parameters such as the precision of capillary position detection. For example, the entire length of the line may be 9-10 mm accounting for (1) the width of the capillary array 160 *(e.g.,* 4.7 mm), (2) the first overage segment, and (3) the second overage segment. This extra distance (overage segments) may be the portions of the line during which deceleration/acceleration phases of oscillation are taking place.

The technique for sizing the laser line with respect to the width of the capillary array 160 may be also applicable for determining the parameters of operation for both the first optical scanner 140 and the second optical scanner 150. For example, the phases of deceleration and acceleration in the opposite direction for both the first optical scanner 140, and the second optical scanner 150 may correspond (all or in part) to the portions of the laser line that extend past the width of the capillary array 160.

The second optical scanner 150 receives the light outputted from the first optical scanner 140. The second optical scanner 150 may be similar in many respects to the first optical scanner 140. The second optical scanner 150 may include a laser galvanometer and may employ an oscillating mirror 152. The range of oscillation of the mirror 152 may provide laser beam deflection up to ± 40°. The rate of oscillation of the second optical scanner 150 may be between approximately 100-1000 Hz *(e.g.,* at least 10-20 times more than the camera framing rate). The second optical scanner 150 outputs a laser line with components oriented along a second dimension. The second dimension may be perpendicular to the first dimension and/or parallel to the orientation of the individual capillaries in the capillary array 160. For example, if the individual capillaries are oriented horizontally, the second dimension of the line outputted by the second optical scanner 150 may be substantially horizontal. The second optical scanner 150 need not oscillate during operation. For example, the rotational amount (e.g., as measured in degrees) may remain static during operation. This static value may be adjustable (for example, between ± 40°). The output of the second optical scanner 150 may be directed at the capillary array 160. Like the first optical scanner 140, the second optical scanner 150 is driven with a control signal that includes an AC component as a triangular wave. The control signal is a combination of a DC signal to set the orientation of the line and an AC signal to determine the length of the line (or at least the orientation and length of the line along one dimension). If the AC component is the same for both optical scanners 140/150 but with a different amplitude, the second optical scanner 150 may tilt the laser line in one direction or another (depending of the relative differences of the AC voltage phases). In this configuration, the first optical scanner 140 may determine the laser line length, and the second optical scanner 150 may determine the laser line orientation/tilt. Control of the tilt angle may compensate for mechanical imperfectness of the laser module assembly, thereby increasing the accuracy and stability of the system in general.

With a triangular wave signal applied to the first optical scanner 140 and the second optical scanner 150, the laser beam may move linearly between the top and bottom endpoints (turning points) with acceleration and deceleration near endpoints. However, the control signal(s) applied to the first optical scanner 140 and/or the second optical scanner 150 may be more complicated. For example, the control signal may cause the first optical scanner 140 and/or the second optical scanner 150 to cause the laser beam to "jump" more quickly from one capillary to another in the capillary array 160. When the scanner(s) 140/150 are not causing the laser beam to "jump" between capillaries, the movement of the laser beam in the laser line may slow down or linger (or possibly even momentarily stop) when it is impinging on a given capillary. Thus, the movement of the laser beam along the laser line may include different phases including phases for when the laser beam is impinging on a given capillary, jumping between capillaries, and slowing down or accelerating proximate the endpoints of the laser line. During the jump and/or slow-down phases, laser power may be modulated (e.g., reduced/increased or switched off/on). Similarly, the laser power may be modulated when the laser beam is not impinging on the capillary array 160 *(i.e.,* extends beyond the capillary array 160). The position of the individual capillaries in the capillary array 160 may be predetermined with a spatial calibration test. During such a test, the fluorescence signal may be measured from each capillary with the laser beam in a known position. Once the positions of the individual capillaries in the capillary array 160 are known (or inferred), the control signal(s) for the first optical scanner 140 and/or the second optical scanner 150 may be determined.

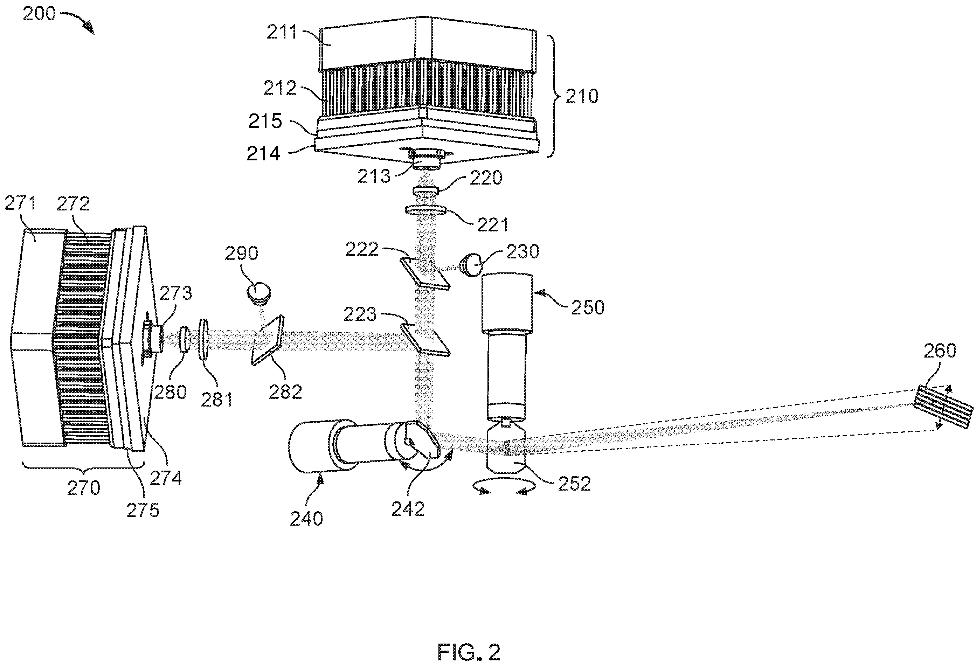

FIG. 2 illustrates a system 200 for illuminating a portion of a capillary array 260 with two lasers, according to certain embodiments. The capillary array 260 may be similar to or identical to capillary array 160. The system 200 may be similar to or identical to the system 100, except that the system 200 may include two laser-source assemblies 210 and 270 (or more than two), whereas the system 100 may only have one laser-source assembly 110. Therefore, the discussion here of the system 200 does not repeat every detail as discussed in conjunction with regard to the system 100.

System 200 may include a first laser-source assembly 210, first focusing optics 220, a first optical filter 221, a first beam splitter 222, a first photodiode 230, a second laser-source assembly 270, a second focusing optics 280, a second optical filter 281, a second beam splitter 282, a second photodiode 290, a beam combiner 223, a first optical scanner 240, a second optical scanner 250, and a capillary array 260. The first laser-source assembly 210, first focusing optics 220, the first optical filter 221, the first beam splitter 222, the first photodiode 230, the first optical scanner 240, the second optical scanner 250, and capillary array 260 may correspond and be identical or similar to components 110, 120, 121, 122, 130, 140, 150, and 160 (respectively) described with regard to FIG. 1. The first laser-source assembly 210, may include a laser diode 213, a laser plate 214, a TEC element 215, a heat sink 212, and a fan 211, which may be similar or identical to components 110, 113, 114, 115, 112, and 111 (respectively) shown and described with respect to FIG. 1.

Components 270, 280, 281, 282, and 290 may correspond and be identical or similar to components 110, 120, 121, 122, 130 (respectively) described with regard to FIG. 1. The second laser-source assembly 270 may include a laser diode 273, a laser plate 274, a TEC element 275, a heat sink 272, and a fan 271, which may be similar or identical to components 110, 113, 114, 115, 112, and 111 (respectively) shown and described with respect to FIG. 1. Assemblies 210 and 270 may be similar except for the wavelengths of the laser lights produced by the respective diodes in the assemblies. This may be useful if a dye kit used for DNA analysis contains two or more "donor" dyes-e.g., dyes that adsorb laser light at different dominant wavelengths (different for each donor dye) and transfer adsorbed energy to other dyes, which cannot efficiently adsorb laser energy, by any mechanism. The lasers may be similar (for example, laser diodes with wavelengths of 493 nm and 518 nm for effective excitation of FAM and Joe dyes), or the lasers can be different types, *e.g.,* one laser can be a laser diode and another one can be a solid state or gas laser.

The laser diode 273, however, may be different from the laser diode 213. For example, the laser diode 273 may emit a light having a different frequency spectrum than what the laser diode 213 emits. For example, the laser diode 213 may emit a light having a frequency spectrum of approximately 485-495 nm with a peak at approximately 493 nm. The laser diode 273 may emit a light having a frequency spectrum of approximately 510-520 nm with a peak at approximately 515 nm.

The optical filter 221 may serve to substantially attenuate light that may interfere with the advantageous fluorescence employed by a CE process. According to one embodiment, the optical filter 221 may pass wavelengths shorter than 520 nm while substantially attenuating wavelengths longer than 520 nm. Such attenuated light frequencies may otherwise interfere with a CE process such as coincidence of laser excitation wavelength with fluorescence light wavelength. The optical filter 221 may be located as shown, or it may be positioned anywhere between the laser diode 213 and the capillary array 260. The optical filter 221 may be high-pass, low-pass, or band pass. The optical filter 221 may include more than one filtering component (for example, a high-pass filter and low-pass filter could be combined to achieve a band pass effect).

The optical filter 281 may serve to substantially attenuate light that may interfere with the advantageous fluorescence employed by a CE process. According to one embodiment, the optical filter 281 may pass wavelengths shorter than 520 nm while substantially attenuating wavelengths outside of that range. Such attenuated light frequencies may otherwise interfere with a CE process such as coincidence of laser excitation wavelength with fluorescence light wavelength. The optical filter 281 may be located as shown, or it may be positioned anywhere between the laser diode 273 and the capillary array 260. The optical filter 281 may be high-pass, low-pass, or band pass. The optical filter 281 may include more than one filtering component (for example, a high-pass filter and low-pass filter could be combined to achieve a band pass effect).

The emitted light from the laser diode 113 and the laser diode 273 may be combined at the beam combiner 223 to form a combined laser beam. This combined laser beam may then be processed by the first optical scanner 240 with mirror 242 and the second optical scanner 250 with mirror 252 as discussed with respect to the first optical scanner 140 with mirror 142 and the second optical scanner 150 with mirror 152 in the context of FIG. 1.

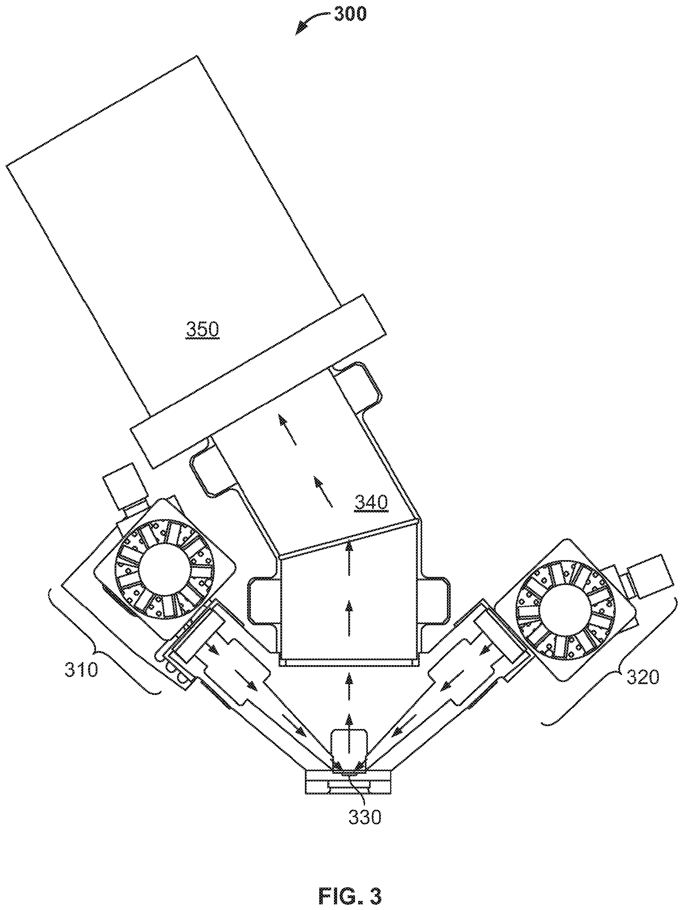

FIG. 3 illustrates a top view of a system 300 for illuminating and imaging a capillary array 330, according to certain embodiments. The system 300 may include laser line generators 310 and 320. Each of the laser line generators 310 and 320 may correspond to systems 100 or 200, depending on whether one or two channels of laser illumination are implemented. For example, laser line generator 310 may correspond to or be identical to system 100, and laser line generator 320 may correspond to or be identical to system 100. As another example, laser line generator 310 may correspond to or be identical to system 200, and laser line generator 320 may correspond to or be identical to system 200. Light from the laser line generators 310, 320 may converge and illuminate the same location on the capillary array 330. The laser line generators 310, 320 may generate substantially identical laser lines that converge and illuminate the same location on the capillary array 330. A two-laser system may be used to make the process of laser line combining more precise and independent from another laser. The angle between the first laser beam and the capillary array 330 and the angle between the second laser beam and the capillary array 330 may be substantially identical, but not necessarily.

Some of the laser light that impinges on the capillary array 330 may be reflected back towards an optical processing system 340. Fluorescence light from the capillary array 330 (that passes through a slit) may be converted to a parallel beam via a first optical element (not shown). This parallel beam may be converted to fluorescence spectrum by a dispersing element *(e.g.,* a diffraction grating; not shown). Spectrally dispersed light may then be focused a second optical element on an optical sensor 350 *(e.g.* CCD or CMOS video camera, such as a 2D optical sensor). The optical sensor 350 may image spectra from all capillaries separately and simultaneously. Using a 2D optical camera may allow simultaneous analysis of any number of capillaries limited only by camera resolution. Each optical element (or a subset of elements) in optical processing system 340 may contain a filter to block laser light and transmit fluorescence light *(e.g.,* longer than 525 nm).

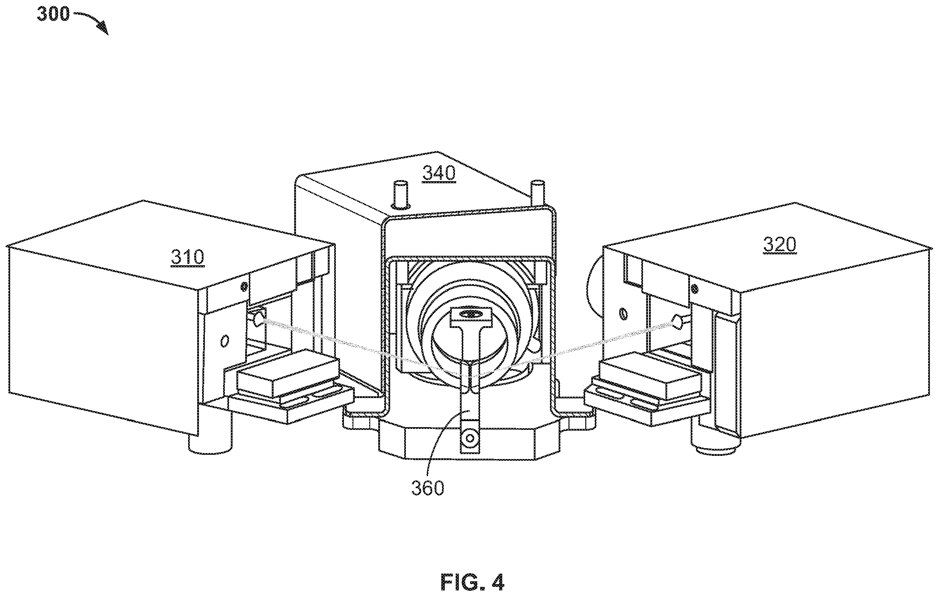

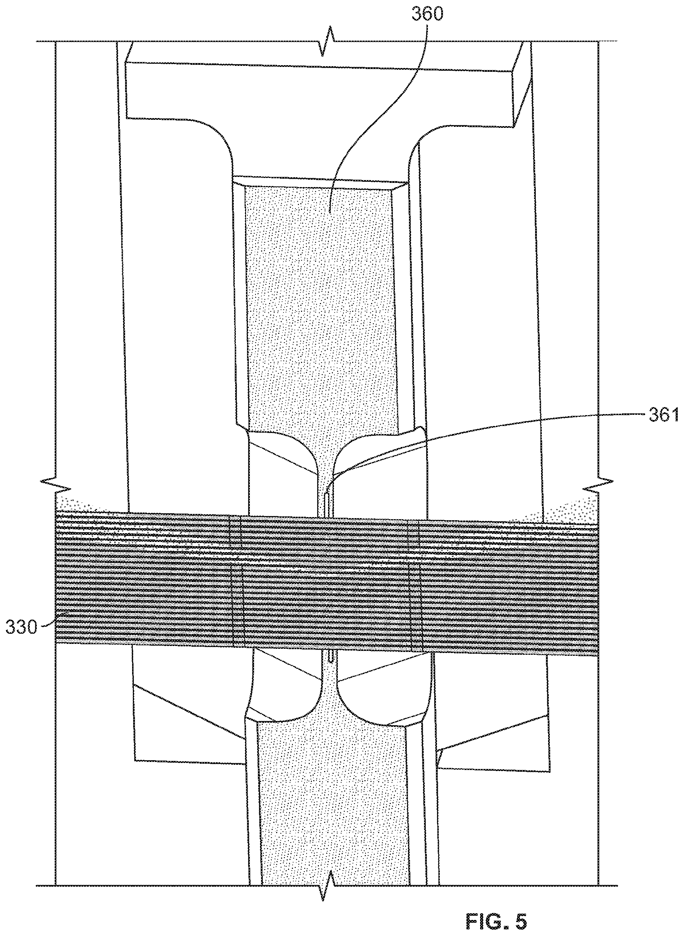

FIG. 4 illustrates a perspective view of a system 300 for illuminating and imaging a capillary array, according to certain embodiments. FIG. 5 illustrates a slit block 360 and illumination of a capillary array 330 with laser beams, according to certain embodiments. A slit block 360 may include two recesses and a slit 361 *(e.g.,* a spectrograph slit) in between the recesses. The slit 361 may be 10-1000 microns wide depending on required spatial, spectral, and time resolution. For example, the slit 361 may be 140 microns wide. The slit may be, *e.g.,* 5-20 mm long, depending on number of capillaries under test. For example, the slit 361 may be 10 mm long. The laser beams may travel through the recesses and impinge on the capillary array 330. Some of the light from the laser beams may be reflected from the capillary array 330 and may travel through the slit 361 in the slit block.

The laser lines formed by each of the laser beams may be positioned using optical scanners as described herein. The laser lines may be positioned using the optical scanners such that the lines align with the slit 361 in the slit block 360. To find an effective position of the laser line(s), sweeping may be performed in both dimensions (e.g., X and Y) separately. The signal from each capillary, or total signal from all capillaries, may then be measured. Based on the degree of illuminance detected by the optical sensor 350, the preferred line orientation may be determined *(e.g.,* a peak illuminance may indicate alignment with the slit in one or more dimensions).

According to one technique, for a given laser-generating system, one of the optical scanners may be used to set the length of the laser line while the other optical scanner may be used to move the line laterally until the laser line aligns with the slit 361. According to this technique, the optical scanner that moves the line laterally may have a static (but adjustable) mirror position. For example, the lateral laser line position may be periodically adjusted to maintain the laser line at a preferred position with respect to the slit.

It will be understood by those skilled in the art that various changes may be made and equivalents may be substituted without departing from the scope of the novel techniques disclosed in this application. In addition, many modifications may be made to adapt a particular situation or material to the teachings of the novel techniques without departing from its scope. Therefore, it is intended that the novel techniques not be limited to the particular techniques disclosed, but that they will include all techniques falling within the scope of the appended claims.

## Claims

1. A laser-line-generating system configured to generate and process a laser light to illuminate a capillary array (160, 260, 330) having a plurality of parallel capillaries, wherein an orientation of the plurality of capillaries defines a reference dimension, the laser-line-generating system comprising:
a laser-light source (110, 210, 310, 320) configured to output a first laser light;
focusing optics (120, 220) configured to receive the first laser light and reduce a beam width of the first laser light;
a first optical scanner (140, 240) configured to:
receive the first laser light; and
output a first optical-scanner-outputted light by varying an angle of outputted light along a first dimension,
wherein the first optical scanner is controlled by at least a first triangular wave signal and a first DC signal;
a second optical scanner (150, 250) configured to:
receive the first optical-scanner-outputted light; and
output a second optical-scanner-outputted light by varying an angle of outputted light along a second dimension,
wherein the second optical scanner is controlled by at least a second triangular wave signal and a second DC signal; and
wherein a path of the second optical-scanner-outputted light comprises a line, where the line includes dimensional components in both the first dimension and the second dimension , and
wherein the first dimension is determined with respect to the reference dimension.

2. The laser-line-generating system of claim 1, wherein:
the first optical scanner (140, 240) comprises a first laser galvanometer; and
the second optical scanner (150, 250) comprises a second laser galvanometer.

3. The laser-line-generating system of claim 2, wherein:
the first laser galvanometer comprises an oscillating mirror configured to deflect the first laser light between approximately -40° to +40°; and
the second laser galvanometer comprises an oscillating mirror configured to deflect the first optical-scanner-outputted light between approximately - 40° to +40°.

4. The laser-line-generating system of claim 2, wherein:
the first laser galvanometer comprises a scanning frequency of between approximately 100-1000 Hz; and
the second laser galvanometer comprises a scanning frequency of between approximately 100-1000 Hz.

5. The laser-line-generating system of claim 1, further comprising temperature-stabilizing componentry configured to stabilize a temperature of the laser-light source (110, 210, 310, 320).

6. The laser-line-generating system of claim 1, further comprising a spectrograph slit, and wherein a position of the laser line is adjustable to substantially correspond to a position of the spectrograph slit by adjusting operation of the first optical scanner (140, 240) and the second optical scanner (150, 250).

7. The laser-line-generating system of claim 1, further comprising:
a light detector configured to:
receive a portion of the laser light; and
generate an output signal in response to a characteristic of the laser light; and
a laser driver configured to:
receive the output signal from the light detector; and
adjust a power provided to the laser-light source according to a value of the output signal.

8. The laser-line-generating system of claim 1, further comprising:
a second laser-light source (270) configured to output a second laser light;
second focusing optics (280) configured to receive the second laser light and reduce a beam width of the second laser light;
wherein the first optical scanner (140, 240) is further configured to:
receive the second laser light.

9. The laser-line-generating system of claim 8, wherein:
the first optical scanner (140, 240) comprises a first laser galvanometer; and
the second optical scanner (150, 250) comprises a second laser galvanometer.

10. The laser-line-generating system of claim 9, wherein:
the first laser galvanometer comprises an oscillating mirror configured to deflect the first laser light between approximately -40° to +40°; and
the second laser galvanometer comprises an oscillating mirror configured to deflect the first optical-scanner-outputted light between approximately - 40° to +40°.

11. The laser-line-generating system of claim 9, wherein:
the first laser galvanometer comprises a scanning frequency of between approximately 100-1000 Hz; and
the second laser galvanometer comprises a scanning frequency of between approximately 100-1000 Hz.

12. The laser-line-generating system of claim 8, further comprising a spectrograph slit, and wherein a position of the laser line is adjustable to substantially correspond to a position of the spectrograph slit by adjusting operation of the first optical scanner (140, 240) and the second optical scanner (150, 250).

13. The laser-line-generating system of claim 8, further comprising:
a first light detector configured to:
receive a portion of the first laser light; and
generate a first output signal in response to a characteristic of the first laser light;
a second light detector configured to:
receive a portion of the second laser light; and
generate a second output signal in response to a characteristic of the second laser light;
a first laser driver configured to:
receive the first output signal; and
adjust a power provided to the first laser-light source (110, 210, 310, 320) according to a value of the first output signal; and
a second laser driver configured to:
receive the second output signal; and
adjust a power provided to the second laser-light source according to a value of the second output signal.

## Patentansprüche

1. Laserlinienerzeugungssystem, das konfiguriert ist, um ein Laserlicht zu erzeugen und zu verarbeiten, um ein Kapillararray (160, 260, 330), das eine Vielzahl von parallelen Kapillaren aufweist, zu beleuchten, wobei eine Ausrichtung der Vielzahl von Kapillaren eine Referenzdimension definiert, das Laserlinienerzeugungssystem umfassend:
eine Laserlichtquelle (110, 210, 310, 320), die konfiguriert ist, um ein erstes Laserlicht auszugeben;
eine Fokussieroptik (120, 220), die konfiguriert ist, um das erste Laserlicht zu empfangen und eine Strahlbreite des ersten Laserlichts zu verringern;
einen ersten optischen Scanner (140, 240), der konfiguriert ist zum:
Empfangen des ersten Laserlichts; und
Ausgeben eines von dem ersten optischen Scanner ausgegebenen Lichts durch Variieren eines Winkels des ausgegebenen Lichts entlang einer ersten Dimension,
wobei der erste optische Scanner durch mindestens ein erstes Dreieckswellensignal und ein erstes Gleichstromsignal gesteuert wird;
einen zweiten optischen Scanner (150, 250), der konfiguriert ist zum:
Empfangen des von dem ersten optischen Scanner ausgegebenen Lichts; und
Ausgeben eines von dem zweiten optischen Scanner ausgegebenen Lichts durch Variieren eines Winkels des ausgegebenen Lichts entlang einer zweiten Dimension,
wobei der zweite optische Scanner durch mindestens ein zweites Dreieckswellensignal und ein zweites Gleichstromsignal gesteuert wird; und
wobei ein Pfad des von dem zweiten optischen Scanner ausgegebenen Lichts eine Linie umfasst, wobei die Linie dimensionale Komponenten sowohl in der ersten Dimension als auch in der zweiten Dimension einschließt, und
wobei die erste Dimension in Bezug auf die Referenzdimension bestimmt wird.

2. Laserlinienerzeugungssystem nach Anspruch 1, wobei:
der erste optische Scanner (140, 240) ein erstes Lasergalvanometer umfasst; und
der zweite optische Scanner (150, 250) ein zweites Lasergalvanometer umfasst.

3. Laserlinienerzeugungssystem nach Anspruch 2, wobei:
das erste Lasergalvanometer einen Schwingspiegel umfasst, der konfiguriert ist, um das erste Laserlicht zwischen etwa -40° bis +40° abzulenken; und
das zweite Lasergalvanometer einen Schwingspiegel umfasst, der konfiguriert ist, um das von dem ersten optischen Scanner ausgegebene Licht zwischen etwa -40° bis +40° abzulenken.

4. Laserlinienerzeugungssystem nach Anspruch 2, wobei:
das erste Lasergalvanometer eine Abtastfrequenz zwischen etwa 100-1000 Hz umfasst; und
das zweite Lasergalvanometer eine Abtastfrequenz zwischen etwa 100-1000 Hz umfasst.

5. Laserlinienerzeugungssystem nach Anspruch 1, ferner umfassend eine Temperaturstabilisierungsbaugruppe, die konfiguriert ist, um eine Temperatur der Laserlichtquelle (110, 210, 310, 320) zu stabilisieren.

6. Laserlinienerzeugungssystem nach Anspruch 1, ferner umfassend einen Spektrographenschlitz, und wobei eine Position der Laserlinie durch Einstellen eines Betriebs des ersten optischen Scanners (140, 240) und des zweiten optischen Scanners (150, 250) einstellbar ist, um im Wesentlichen einer Position des Spektrographenschlitzes zu entsprechen.

7. Laserlinienerzeugungssystem nach Anspruch 1, ferner umfassend:
einen Lichtdetektor, der konfiguriert ist zum:
Empfangen eines Anteils des Laserlichts; und
Erzeugen eines Ausgabesignals in Reaktion auf eine Eigenschaft des Laserlichts; und
einen Lasertreiber, der konfiguriert ist zum:
Empfangen des Ausgabesignals von dem Lichtdetektor; und
Einstellen einer Leistung, die an die Laserlichtquelle bereitgestellt wird, gemäß einem Wert des Ausgabesignals.

8. Laserlinienerzeugungssystem nach Anspruch 1, ferner umfassend:
eine zweite Laserlichtquelle (270), die konfiguriert ist, um ein zweites Laserlicht auszugeben;
eine zweite Fokussieroptik (280), die konfiguriert ist, um das zweite Laserlicht zu empfangen und eine Strahlbreite des zweiten Laserlichts zu verringern;
wobei der erste optische Scanner (140, 240) ferner konfiguriert ist zum: Empfangen des zweiten Laserlichts.

9. Laserlinienerzeugungssystem nach Anspruch 8, wobei:
der erste optische Scanner (140, 240) ein erstes Lasergalvanometer umfasst; und
der zweite optische Scanner (150, 250) ein zweites Lasergalvanometer umfasst.

10. Laserlinienerzeugungssystem nach Anspruch 9, wobei:
das erste Lasergalvanometer einen Schwingspiegel umfasst, der konfiguriert ist, um das erste Laserlicht zwischen etwa -40° bis +40° abzulenken; und
das zweite Lasergalvanometer einen Schwingspiegel umfasst, der konfiguriert ist, um das von dem ersten optischen Scanner ausgegebene Licht zwischen etwa -40° bis +40° abzulenken.

11. Laserlinienerzeugungssystem nach Anspruch 9, wobei:
das erste Lasergalvanometer eine Abtastfrequenz zwischen etwa 100-1000 Hz umfasst; und
das zweite Lasergalvanometer eine Abtastfrequenz zwischen etwa 100-1000 Hz umfasst.

12. Laserlinienerzeugungssystem nach Anspruch 8, ferner umfassend einen Spektrographenschlitz, und wobei eine Position der Laserlinie durch Einstellen des Betriebs des ersten optischen Scanners (140, 240) und des zweiten optischen Scanners (150, 250) einstellbar ist, um im Wesentlichen einer Position des Spektrographenschlitzes zu entsprechen.

13. Laserlinienerzeugungssystem nach Anspruch 8, ferner umfassend:
einen ersten Lichtdetektor, der konfiguriert ist zum:
Empfangen eines Anteils des ersten Laserlichts; und
Erzeugen eines ersten Ausgabesignals als Reaktion auf eine Eigenschaft des ersten Laserlichts;
einen zweiten Lichtdetektor, der konfiguriert ist zum:
Empfangen eines Anteils des zweiten Laserlichts; und
Erzeugen eines zweiten Ausgabesignals in Reaktion auf eine Eigenschaft des zweiten Laserlichts;
einen ersten Lasertreiber, der konfiguriert ist zum:
Empfangen des ersten Ausgabesignals; und
Einstellen einer Leistung, die an die erste Laserlichtquelle (110, 210, 310, 320) bereitgestellt wird, gemäß einem Wert des ersten Ausgabesignals; und
einen zweiten Lasertreiber, der konfiguriert ist zum:
Empfangen des zweiten Ausgabesignals; und
Einstellen einer Leistung, die an die zweite Laserlichtquelle bereitgestellt wird, gemäß einem Wert des zweiten Ausgabesignals.

## Revendications

1. Système de génération de raie laser configuré pour générer et traiter une lumière laser pour éclairer un réseau de capillaires (160, 260, 330) ayant une pluralité de capillaires parallèles, dans lequel une orientation de la pluralité de capillaires définit une dimension de référence, le système de génération de raie laser comprenant :
une source de lumière laser (110, 210, 310, 320) configurée pour délivrer en sortie une première lumière laser ;
des éléments optiques de focalisation (120, 220) configurés pour recevoir la première lumière laser et réduire une largeur de faisceau de la première lumière laser ;
un premier scanneur optique (140, 240) configuré pour :
recevoir la première lumière laser ; et
délivrer en sortie une première lumière délivrée en sortie par un scanneur optique en faisant varier un angle de la lumière délivrée en sortie le long d'une première dimension,
dans lequel le premier scanneur optique est commandé par au moins un premier signal d'onde triangulaire et un premier signal continu ;
un second scanneur optique (150, 250) configuré pour :
recevoir la première lumière délivrée en sortie par un scanneur optique ; et
délivrer en sortie une seconde lumière délivrée en sortie par un scanneur optique en faisant varier un angle de lumière délivrée en sortie le long d'une seconde dimension,
dans lequel le second scanneur optique est commandé par au moins un second signal d'onde triangulaire et un second signal continu ; et
dans lequel un trajet de la seconde lumière délivrée en sortie par un scanneur optique comprend une raie, où la raie comporte des composantes dimensionnelles à la fois dans la première dimension et la seconde dimension, et
dans lequel la première dimension est déterminée par rapport à la dimension de référence.

2. Système de génération de raie laser selon la revendication 1, dans lequel :
le premier scanneur optique (140, 240) comprend un premier galvanomètre laser ; et
le second scanneur optique (150, 250) comprend un second galvanomètre laser.

3. Système de génération de raie laser selon la revendication 2, dans lequel :
le premier galvanomètre laser comprend un miroir oscillant configuré pour dévier la première lumière laser entre environ -40° et +40° ; et
le second galvanomètre laser comprend un miroir oscillant configuré pour dévier la première lumière délivrée en sortie par un scanneur optique entre environ -40° et +40°.

4. Système de génération de raie laser selon la revendication 2, dans lequel :
le premier galvanomètre laser comprend une fréquence de balayage comprise entre environ 100 et 1 000 Hz ; et
le second galvanomètre laser comprend une fréquence de balayage comprise entre environ 100 et 1 000 Hz.

5. Système de génération de raie laser selon la revendication 1, comprenant en outre des composants de stabilisation de température configurés pour stabiliser une température de la source de lumière laser (110, 210, 310, 320).

6. Système de génération de raie laser selon la revendication 1, comprenant en outre une fente de spectrographe, et dans lequel une position de la raie laser est ajustable pour correspondre sensiblement à une position de la fente de spectrographe en ajustant le fonctionnement du premier scanneur optique (140, 240) et du second scanneur optique (150, 250).

7. Système de génération de raie laser selon la revendication 1, comprenant en outre :
un détecteur de lumière configuré pour :
recevoir une partie de la lumière laser ; et
générer un signal de sortie en réponse à une caractéristique de la lumière laser ; et
un circuit d'attaque de laser configuré pour :
recevoir le signal de sortie du détecteur de lumière ; et
ajuster une puissance fournie à la source de lumière laser selon une valeur du signal de sortie.

8. Système de génération de raie laser selon la revendication 1, comprenant en outre :
une seconde source de lumière laser (270) configurée pour délivrer en sortie une seconde lumière laser ;
des seconds éléments optiques de focalisation (280) configurés pour recevoir la seconde lumière laser et réduire une largeur de faisceau de la seconde lumière laser ;
dans lequel le premier scanneur optique (140, 240) est en outre configuré pour : recevoir la seconde lumière laser.

9. Système de génération de raie laser selon la revendication 8, dans lequel :
le premier scanneur optique (140, 240) comprend un premier galvanomètre laser ; et
le second scanneur optique (150, 250) comprend un second galvanomètre laser.

10. Système de génération de raie laser selon la revendication 9, dans lequel :
le premier galvanomètre laser comprend un miroir oscillant configuré pour dévier la première lumière laser entre environ -40° et +40° ; et
le second galvanomètre laser comprend un miroir oscillant configuré pour dévier la première lumière délivrée en sortie pas un scanneur optique entre environ - 40° et +40°.

11. Système de génération de raie laser selon la revendication 9, dans lequel :
le premier galvanomètre laser comprend une fréquence de balayage comprise entre environ 100 et 1 000 Hz ; et
le second galvanomètre laser comprend une fréquence de balayage comprise entre environ 100 et 1 000 Hz.

12. Système de génération de raie laser selon la revendication 8, comprenant en outre une fente de spectrographe, et dans lequel une position de la raie laser est ajustable pour correspondre sensiblement à une position de la fente de spectrographe en ajustant le fonctionnement du premier scanneur optique (140, 240) et du second scanneur optique (150, 250).

13. Système de génération de raie laser selon la revendication 8, comprenant en outre :
un premier détecteur de lumière configuré pour :
recevoir une partie de la première lumière laser ; et
générer un premier signal de sortie en réponse à une caractéristique de la première lumière laser ;
un second détecteur de lumière configuré pour :
recevoir une partie de la seconde lumière laser ; et
générer un second signal de sortie en réponse à une caractéristique de la seconde lumière laser ;
un premier circuit d'attaque de laser configuré pour :
recevoir le premier signal de sortie ; et
ajuster une puissance fournie à la première source de lumière laser (110, 210, 310, 320) selon une valeur du premier signal de sortie ; et
un second circuit d'attaque de laser configuré pour :
recevoir le second signal de sortie ; et
ajuster une puissance fournie à la seconde source de lumière laser selon une valeur du second signal de sortie.
